# EUROPEAN PATENT SPECIFICATION

(11) **EP 0 914 246 B1**
(45) Date of publication and mention of the grant of the patent: **31.03.2004**
(21) Application number: 97932921.6
(22) Date of filing: 22.07.1997
(51) Int. Cl.: B32B 5/28, B32B 19/06, F01N 3/02, F01N 3/28, D04H 1/64

(54) **COMPOSITE MAT**
VERBUNDMATTE
MATELAS COMPOSITE

(30) Priority: 26.07.1996 GB 9615720
(43) Date of publication of application: 12.05.1999
(73) Proprietor: Saffil Limited, Sheffield, South Yorkshire S10 3GB (GB)
(72) Inventor: DINWOODIE, John, Spital, Wirral L62 2EE (GB)
(74) Representative: Shaw, Laurence
(86) International application number: PCT/GB1997/001971
(87) International publication number: WO 1998/004404

(56) References cited:
- EP-A- 0 328 293
- EP-A- 0 573 834
- WO-A-93/23245
- WO-A-94/24425
- WO-A-97/02413
- WO-A-97/32118
- US-A- 4 999 168

## Description

The present invention relates to a laminated composite mat comprising a layer of inorganic fibres which are bound together with a binder and a layer of an intumescent material. More particularly, the present invention relates to a laminated composite mat which can be used for resiliently mounting the fragile ceramic or metal monoliths which are found in catalytic converters and diesel particulate filters in their metal casings. The invention also relates to a process for preparing a laminated composite mat.

Catalytic converters and diesel particulate filters arc routinely fitted to automobiles and other road going vehicles in order to purify the exhaust gases which are generated by the engine. These devices usually comprise a ceramic honeycomb monolith which is housed within a metal casing and provides a support for the catalyst. The ceramic monolith comprises a plurality of tiny flow channels and is a fragile structure which is susceptible to damage when subjected to the kind of vibrational forces which prevail when any road going vehicle is in use. Moreover, the monolith and the surrounding metal casing arc subjected to extremely high temperatures in use which causes them to expand, but not to the same extent. In consequence, the mounting system which is used to mount the ceramic monolith in its metal casing must insulate the monolith from the attendant vibrational forces and compensate for any difference between the expansion of the monolith and the casing. In this way, the stresses to which the monolith is subjected during use as a result of differential expansion or vibrational forces can be reduced to an acceptable level.

It is known to use a composite fibre mat to mount the fragile ceramic monolith in the surrounding metal casing, see for example US-4,011,651 and WO-94/24425. The fibre mat is arranged in the annular space between the monolith and the surrounding metal casing and is maintained under compression in the annular space so exerting a radial pressure on the monolith and the casing which retains the monolith in place.

EP-0573834A discloses a catalytic converter including a monolith mounted in a canister by a heat insulating mat which is made up of melt-formed refractory ceramic fibres that have been annealed to give the mat a so-called resiliency value of at least 10 kPa. Preferably, the fibres are in fine grained crystalline form. The mat may also contain a separate layer comprising unexpanded vermiculite flake.

We have now developed a laminated composite mat comprising a layer of inorganic fibres which are bound together with a binder and a layer of an intumescent material. The composite mat can be used to mount the ceramic or metal monoliths found in catalytic converters and diesel particulate filters in their metal casings.

According to the present invention there is provided a laminated composite mat comprising first and second layers, the first layer comprising an intumescent (expandable) material and the second layer comprising a plurality of inorganic fibres and a binder which serves to bind the fibres together and to bond the second layer to the first layer.

The laminated composite mat of the present invention comprises two discrete layers which are bonded together to form an integral assembly by the adhesive action of the binder contained in the second layer.

Preferably the binder is substantially uniformly distributed throughout the second layer whereby the second layer has a laminar shear strength of at least 0.1 MPa.

The intumescent material contained in the first layer is preferably an unexpanded layer silicate mineral and more preferably is unexpanded vermiculite. The unexpanded vermiculite is preferably in the form of flakes and may be untreated or treated by being ion exchanged with ammonium compounds such as ammonium dihydrogen phosphate, ammonium carbonate or ammonium chloride. In a preferred embodiment, the first layer is itself a flexible composite sheet comprising a combination of unexpanded vermiculite flakes, an organic binder, an inorganic filler and optionally a fibrous inorganic material. Suitable fibrous inorganic materials include aluminosilicate fibres, glass fibres. zirconia fibres. zirconia-silica fibres. alumina fibres, alumina whiskers, aluminoborosilicate fibres, mullite fibres and titania fibres. Suitable organic binders include natural rubber, styrene-butadiene copolymers, butadiene-acrylonitrile copolymers and acrylate and methacrylate polymers and copolymers. Suitable inorganic fillers include expanded vermiculite, hollow glass microspheres and bentonite. In this preferred embodiment, the first layer will preferably comprise from 20.0 to 65.0 % by weight of the unexpanded vermiculite flakes, from 3.0 to 20.0 % by weight of the organic binder, up to 40.0 % by weight of the inorganic filler and from 10.0 to 50.0 % by weight of the fibrous inorganic material (if present). Such flexible composite sheets are available in a thickness of from about 1.5 to about 10.0 mm under the trade name Interam.

The inorganic fibres contained in the second layer of the composite mat of the invention may be any of the inorganic fibres known in the art. However, when the composite mat is to be used in catalytic converters and diesel particulate filters for resiliently mounting the ceramic or metal monoliths they contain, the fibres will need to be thermally stable (i.e. will not degrade) at the high operating temperatures prevailing in such devices. Typically, the fibres contained in composite mats which are to be used in such mounting applications will be thermally stable at temperatures in excess of 700°C, preferably in excess of 800°C and more preferably in excess of 900°C.

Thermally stable inorganic fibres include ceramic fibres such as alumina, mullite, aluminosilicate, aluminoborosilicate, zirconia and titania fibres as well as vitreous glass fibres. The preferred thermally stable inorganic fibres are polycrystalline inorganic fibres, particularly polycrystalline inorganic oxide fibres, such as alumina, mullite, aluminosilicate, aluminoborosilicate, zirconia and titania fibres. Of these, alumina fibres, by which term we are also intending to include alumina fibres comprising a few weight % of silica added as a phase stabiliser, are particularly preferred. The fibres are preferably short staple fibres having a length in the range of from 1 to 10 cms and a mean diameter in the range of from 1 to 10 microns. Especially preferred alumina fibres arc those sold in the form of a loosely bound, low density mat by Imperial Chemical Industries PLC under the trade name Saffil which are thermally stable at temperatures in excess of 1000°C.

The second layer may comprise two or more different types of inorganic fibre which may be intimately mixed or else segregated and arranged in definite patterns, e.g. in discrete layers.

The binder contained in the second layer may be an inorganic material, but is preferably organic and more preferably is an organic polymer. Suitable organic binders are more particularly described in US-4,011,651 and WO-94/24425, the disclosures in which are incorporated herein by way of reference, and include polymers derived from precursor polymers or prcpolymcrs which arc cured in situ on the inorganic fibres as part of the process used to manufacture the composite mat.

A particularly suitable binder is that obtained on curing a curable polymer composition. Suitable examples of curable polymer compositions arc those comprising a combination of an acrylic polymer and a cross-linking agent, particular an epoxy group containing cross-linking agent such as an epoxy resin. Curable polymer compositions of this type will typically comprise from 90.0 to 99.0 % by weight, preferably from 95.0 to 99.0 % by weight of the acrylic polymer and from 1.0 to 10.0 % by weight, preferably from 1.0 to 5.0 % by weight of the cross-linking agent. The acrylic polymer is suitably a homopolymer or copolymer comprising monomer units derived from at least one acrylic monomer selected from the C₁₋₈ alkyl (C₁₋₄ alkyl)acrylates, and in a preferred embodiment is a homopolymer or copolymer comprising monomer units derived from at least one acrylic monomer selected from the C₁₋₄ alkyl (meth)acrylates, for example methyl methacrylate, methyl acrylate, ethyl acrylate, propyl acrylate and butyl acrylate. One suitable example of such a binder is a copolymer based on n-butyl acrylate and acrylonitrile.

When a composite mat of the invention is to be used for mounting a ceramic or metal monolith in a catalytic converter or in a diesel particulate fiber, the binder contained in the second layer is preferably an organic binder which will be substantially pyrolysed/burned out by the high temperatures to which the mat will be subjected in use. In addition, the organic binder is preferably one which will not lead to the generation of toxic emissions when it is pyrolysed/burned out and for this reason is preferably free of chlorine and nitrogen.

The loading of the binder in the second layer will typically be in the range of from 2 to 15 % by weight and preferably in the range of from 5 to 15 % by weight.

When a composite mat of the invention is to be used to mount a ceramic or metal monolith. the inorganic fibres contained in the second layer will generally be held in a compressed state by the binder so that they can exert a pressure which acts between the monolith and the surrounding casing once the binder is removed. Typically, the second layer will have a density in the range of from 30 to 700 kg/m³, preferably in the range of from 100 to 500 kg/m³ and more preferably in the range of from 100 to 350 kg/m³.

Preferably the distribution of the binder in the second laycr is such that the percentage by weight of binder in each 1 mm³ region of the layer based on the total weight of the layer in that region is within 40 %, more preferably within 30 % and particularly preferably within 20 % of the overall percentage by weight of binder in the layer based on the total weight of the layer. In an especially preferred embodiment, the distribution of the binder in the second layer is such that the percentage by weight of binder in each 1 mm³ region of the layer based on the total weight of the layer in that region is within 10 % of the overall percentage by weight of binder in the layer based on the total weight of the layer.

In the composite mat of the present invention, the second layer preferably has a laminar shear strength, by which is meant the force which has to be applied in order to bring about delamination of the layer, of at least 0.1 MPa, more preferably of at least 0.2 MPa and most preferably of at least 0.3 MPa. The laminar shear strength can be conveniently measured on an instron or similar machine using a three point bend test. Preferably, the second layer is also capable of exerting a pressure of at least 10⁴ Pa (1.0 kgf/cm²), more preferably in the range of from 14.7 × 10⁴ Pa to 39.2 × 10⁴ Pa (1.5 to 4.0 kgf/cm²) when a sample of the layer having a thickness in the range of from 5 to 10 mm is compressed to a thickness of 3 mm between two plates and the binder removed.

The second layer is conveniently formed by impregnating a fibre mass comprising the inorganic fibres with a liquid binder system comprising the binder or a precursor thereof and a carrier liquid. After the fibre mass has been impregnated with the liquid binder system, and generally following removal of any excess carrier liquid, the impregnated fibre mass is subjected to a drying step. The impregnated fibre mass is preferably held under compression during at least a part of the drying step until such time as the binder is able to hold the fibres together and significantly limit the expansion of the fibrous layer once the compressive forces are released. In general, the whole of the drying step will be performed while the impregnated fibre mass is held under compression, but it may also be possible to perform just the final stages of the drying step in this manner and still obtain satisfactory results. During the drying step, substantially all and preferably all of any residual carrier liquid will be removed. Removal of excess carrier liquid prior to drying can be achieved by pressing the impregnated fibre mass between rollers or plates, by placing it under vacuum or by centrifuging.

The pressure which is usually applied during the drying step to compress the impregnated fibre mass will generally be in the range of from 5 to 500 KPa, preferably in the range of from 5 to 200 KPa. In general. the pressure applied is such as to produce a bound fibrous layer having a density in the range of from 30 to 700 kg/m³, preferably in the range of from 100 to 500 kg/m³, more preferably in the range of from 100 to 350 kg/m³. When the fibre mass which is impregnated is a multi-fibre product having a thickness in the range of from 10 to 60 mm, e.g. in the range of from 30 to 50 mm. and an area density in the range of from 0.2 to 2.0 kg/m², e.g. in the range of from 1.0 to 2.0 kg/m², the resulting impregnated fibre mass will generally be compressed to a thickness in the range of from 2 to 5 mm during the drying step. This pressure is conveniently applied in a batch process by sandwiching the impregnated fibre mass or a laminate of the impregnated fibre mass and a preformed intumescent sheet between plates and then squeezing the plates together, e.g. by means of clamps. spring loadcd clips or hydraulic presses. Alternatively, in a continuous process. it may be convenient to generate the necessary compressive forces on the impregnated fibre mass using an arrangement of rollers or belts.

The fibre mass which is impregnated may comprise a plurality of discrete fibres or it may take the form of a multi-fibre product in which the individual fibres are assembled into a low density mat which is loosely held together by fibre intertwining or perhaps more robustly consolidated by some other means such as weaving. knitting. stitching, needle-punching or vacuum packing. Preferably, the fibre mass which is impregnated is a multi-fibre product, particularly one having a thickness in the range of from 10 to 60 mm. more particularly in the range of from 30 to 50 mm, and an area density in the range of from 0.2 to 2.0 kg/m², more particularly in the range of from 1.0 to 2.0 kg/m².

The liquid binder system may comprise an inorganic binder material, but preferably comprises an organic binder or a precursor thereof and an organic or aqueous carrier liquid which is able to dissolve or disperse the organic binder or precursor. Suitable binder systems arc described in US-4,011,651 and WO-94/24425 and include dispersions or solutions of polymers or of curable precursor polymers (prepolymers) which can be cured in situ on the impregnated fibre mass as part of the drying step or in a subsequent processing step. The organic binder or its precursor may be a recyclable material which allows for the recovery of fibres from waste product generated in the manufacture of the laminated composite mat of the invention.

A particularly suitable binder system is one comprising a dispersion, preferably an aqueous dispersion. of a curable polymer composition. sometimes termed a resin or latex. Suitable examples of curable polymer compositions arc those comprising a combination of an acrylic polymer and a cross-linking agent. particular an epoxy group containing cross-linking agent such as an epoxy resin. Curable Polymer compositions of this type will typically comprise from 90.0 to 99.0 % by weight, preferably from 95.0 to 99.0 % by weight of the acrylic polymer and from 1.0 to 10.0 % by weight, preferably from 1.0 to 5.0 % by weight of the cross-linking agent. The acrylic polymer is suitably a homopolymer or copolymer comprising monomer units derived from at least one acrylic monomer selected from the C₁₋₈ alkyl (C₁₋₄ alkyl)acrylates, and in a preferred embodiment is a homopolymer or copolymer comprising monomer units derived from at least one acrylic monomer selected from the C₁₋₄ alkyl (meth)acrylates, for example methyl methacrylate, methyl acrylate, ethyl acrylate, propyl acrylate and butyl acrylate. A preferred binder system is one comprising an aqueous dispersion of a curable copolymer based on n-butyl acrylate and acrylonitrile.

When the liquid binder system is one comprising a curable polymer composition, it may also comprise a catalyst to accelerate the curing process.

It will be appreciated from the above. that by the term liquid binder system we are also intending to include binder systems which comprise dispersions or suspensions of finely divided solids in liquid vehicles.

The liquid binder system will typically comprise from 0.5 to 50.0 % by weight of the binder or precursor and from 50.0 to 99.5 % by weight of the carrier liquid. Preferably the liquid binder system will comprise from 0.5 to 10.0 % by weight, more preferably from 1.0 to 5.0 % by weight of the binder or precursor and from 90.0 to 99.5 % by weight, more preferably from 95.0 to 99.0 % by weight of the carrier liquid.

The drying step normally involves the application of heat. A conventional oven may be employed to provide the heating, but in one method which is used to prepare a laminated composite mat of the invention dielectric heating such as microwave or radio frequency heating, preferably in combination with a conventional heating means such as a flow of hot air, is employed since it can result in an appreciably more uniform distribution of the binder in the second fibrous layer. Typically, the drying step will involve heating the impregnated fibre mass to a temperature in the range of from 80 to 200°C, preferably in the range of from 100 to 170°C. Temperatures in the range of from 140 to 160°C are especially preferred.

Accordingly, in a third aspect of the present invention there is provided a method for the production of a laminated composite mat comprising first and second layers, the first layer comprising an intumesccnt material and the second layer comprising a plurality of inorganic fibres and a binder which binds the inorganic fibres together, which method comprises forming the second layer by a process comprising impregnating a fibre mass comprising the inorganic fibres with a liquid binder system comprising the binder or a precursor thereof and a carrier liquid and subjecting the impregnated fibre mass which is obtained to a drying step comprising the use of dielectric heating so as to at least substantially remove the carrier liquid.

In another method which is used to prepare a laminated composite mat of the invention, at least the final stages of the process used to remove the carrier liquid are conducted while the impregnated fibre mass is positioned on one side of a preformed sheet of the intumescent material so as to allow the binder to perform the function of bonding the first and second layers together.

Accordingly, in a fourth aspect of the present invention there is provided a method for the production of a laminated composite mat comprising first and second layers. the first layer comprising an intumescent material and the second layer comprising a plurality of inorganic fibres and a binder which serves to bind the inorganic fibres together and to bond the second layer to the first layer. which method comprises impregnating a fibre mass comprising the inorganic fibres with a liquid binder system comprising the binder or a precursor thereof and a carrier liquid and subjecting the impregnated fibre mass which is obtained to a drying step while deposited as a layer on one side of a preformed sheet comprising the intumescent material so as to at least substantially remove the carrier liquid.

In the method of this fourth aspect, the drying step normally involves the application of heat. A conventional oven may be employed to provide the heating, but in a preferred embodiment dielectric heating such as microwave or radio frequency heating, preferably in combination with a conventional heating means such as a flow of hot air, is employed. The typical and preferred temperatures employed in the drying step are as described above.

In the method of this fourth aspect, a layer of inorganic fibres can be deposited on one side of the preformed intumescent sheet and then impregnated with the liquid binder system while in position on that sheet. Removal of the carrier liquid from the impregnated fibre layer and curing of the precursor binder when such a material is used will produce a laminated composite mat of the invention in which the layer of inorganic fibres is bound together and also bonded to the preformed intumescent sheet by the action of the binder which is left behind. Alternatively, the fibre mass may first be impregnated with the liquid binder system and then deposited on one side of the preformed intumesccnt sheet to form a layer. As before, removal of the carrier liquid from the impregnated fibre mass and curing of the precursor binder when used will produce a laminated composite mat of the invention, but with this latter technique a proportion of the carrier liquid can be removed from the impregnated fibre mass before it is deposited on the preformed intumescent sheet.

It may also be advantageous to coat the preformed intumescent sheet with the liquid binder system prior to depositing the fibre mass or impregnated fibre mass thereon, e.g. by spraying the sheet with the liquid binder system or by immersing the sheet in a bath of the liquid binder system.

In this fourth aspect of the present invention. any removal of excess carrier liquid prior to drying can be achieved either before or when the impregnated fibre mass is in position on the preformed intumescent sheet. It may also be desirable to subject the impregnated fibre mass to a pre-drying step, in which a substantial proportion of the carrier liquid is removed by the application of heat, before it is laid in position on the preformed intumescent sheet. The drying step itself is carried out while the impregnated fibre mass is in position on the preformed intumescent sheet.

Various techniques may be used to impregnate the mass of inorganic fibres. For example, the individual fibres may be thoroughly dispersed in the liquid binder system and the resulting dispersion cast into a layer. e.g. using a paper making process. In the method of the fourth aspect of the present invention, the dispersion can be cast as a layer on a preformed intumescent sheet. Alternatively, individual fibres may be deposited as a layer, e.g. on a preformed intumescent sheet, and the resulting fibre layer impregnated with the liquid binder system.

When the mass of inorganic fibres takes the form of a multi-fibre product in which the individual fibres arc assembled into a low density mat, the mat may be simply immersed or soaked in the liquid binder system. Alternatively, the low density fibre mat may be sprayed with the liquid binder system. In the method of the fourth aspect of the present invention. treatment of the mat with the liquid binder system may be carried out either before or after the mat is laid in position on the preformed intumescent sheet.

When the liquid binder system comprises a dispersion of a curable precursor polymer, as is preferred, the drying step may be followed by a further processing step in which the precursor polymer is cured. This curing process preferably involves the precursor polymer undergoing some form of cross-linking reaction. However, the temperatures which are employed in the drying step are usually sufficient to both dry the impregnated fibre mass and cure the precursor polymer so that a separate curing step is generally unnecessary. When a separate curing step is employed. however, it is desirable to maintain the impregnated fibre mass under compression for the duration of the curing step.

The thickness of the composite mat of the invention will depend on the intended end use for the mat. However, when the composite mat is to be used to mount a ceramic or metal monolith in a catalytic converter or diesel particulate filter, it will typically have a thickness in the range of from 3 to 15 mm, preferably in the range of from 5 to 12 mm and more preferably in the range of from 5 to 9 mm.

The thickness of the first and second layers relative to one another may be different for different applications and may be adjusted so that the composite mat gives the best performance in a given application in line with acceptable cost. However, the first layer containing the intumescent material will typically constitute from 10 to 50 % of the total thickness of the composite mat.

The laminated composite mat of the invention may also be used to support the ceramic monoliths found in hot gas filtration units and coal gasification plants. The laminated composite mat of the invention may also be usefully employed in gasket applications.

The present invention is now illustrated but not limited with reference to the following example.

### Example 1

A sample of Saffil (TM) low density alumina fibre mat having an area of about 520 mm by 210 mm and a thickness of from 25 to 55 mm was immersed in a latex (Acronal (TM) 35D, a 50 % aqueous dispersion of a curable copolymer based on n-butyl acrylate and acrylonitrile available from BASF) which had been diluted to a solids content of around 3 % w/w. The impregnated Saffil mat weighed approximately 131.0 g and had a specific weight per surface area of about 1.2 kg/m².

The impregnated Saffil mat was then laid on top of a similar sized piece of Interam (TM) 100 mounting mat (an intumescent sheet material available from 3M: area density about 1.05 kg/m²) which had been previously immersed in the same latex solution as the Saffil mat. The resulting laminate was sandwiched between two sheets of PTFE-coated glass fibre mesh which provided a release surface and this sandwich was then placed between two sheets of glass fibre filled silicone resin board. The whole assembly was then pressed together using mole grips until the impregnated "Saffil" layer was reduced to a thickness of about 5 mm (equal to an applied pressure of about 0.5 bar (50 KPa)), and held in this position with clips. During this assembly excess latex drained from the samples.

The complete mould assembly was then placed on the belt of an air/radio frequency (RF) assisted oven and the belt speed was adjusted to give a residence time of about 20 minutes. The RF power to the oven was set at about 5.5 KW and the temperature of the air in the oven was adjusted to about 155°C. The sample was removed from the oven when the latex had been fully dried and cured (cross-linked). The clips and the boards were then carefully removed from the samples and the PTFE mesh peeled off to reveal the final composite mat which had a thickness of around 8 to 9 mm.

## Claims

1. A laminated composite mat comprising first and second layers, the first layer comprising an intumescent material and the second layer comprising a plurality of inorganic fibres and a binder which serves to bind the fibres together and to bond the second layer to the first layer.

2. A laminated composite mat as claimed in Claim 1, wherein the binder is substantially uniformly distributed throughout the second layer whereby the second layer has a laminar shear strength of at least 0.1 MPa.

3. A laminated composite mat as claimed in Claim 1 or Claim 2, wherein the distribution of the binder in the second layer is such that the percentage by weight of binder in each 1 mm² region of the layer based on the total weight of the layer in that region is within 40 % of the overall percentage by weight of binder in the layer based on the total weight of the layer.

4. A laminated composite mat as claimed in Claim 3, wherein the distribution of the binder in the second layer is such that the percentage by weight of binder in each 1 mm² region of the layer based on the total weight of the layer in that region is within 10 % of the overall percentage by weight of binder in the layer based on the total weight of the layer.

5. A laminated composite mat as claimed in any preceding Claim, wherein the second layer has a laminar shear strength of at least 0.2 MPa.

6. A laminated composite mat as claimed in any preceding Claim, wherein the second layer is capable of exerting a pressure of at least 9.8 × 10⁴ Pa (1.0 kgf/cm²) when a sample of the layer having a thickness in the range of from 5 to 10 mm is compressed to a thickness of 3 mm between two plates and the binder is removed.

7. A laminated composite mat as claimed in Claim 6, wherein the second layer is capable of exerting a pressure in the range of from 14.7 × 10⁴ Pa to 39.2 × 10⁴ Pa (1.5 to 4.0 kgf/cm²⁾ when a sample of the layer having a thickness in the range of from 5 to 10 mm is compressed to a thickness of 3 mm between two plates and the binder is removed.

8. A laminated composite mat as daimed in any one of the preceding Claims, wherein the first layer is a composite sheet comprising a combination of unexpanded vermiculite flakes, an organic binder, an inorganic filler and optionally a fibrous inorganic material.

9. A laminated composite mat as claimed in any one of the preceding Claims, wherein the inorganic fibres contained in the second layer are thermally stable at temperatures in excess of 700°C.

10. A laminated composite mat as claimed in any one of the preceding Claims, wherein the inorganic fibres contained in the second layer are ceramic fibres.

11. A laminated composite mat as claimed in Claim 9 or Claim 10, wherein the inorganic fibres contained in the second layer are polycrystalline inorganic oxide fibres selected from the group consisting of alumina fibres, mullite fibres, aluminosilicate fibres, aluminoborosilicate fibres, zirconia fibres and titania fibres.

12. A laminated composite mat as claimed in any one of the preceding Claims, wherein the inorganic fibres contained in the second layer are short staple fibres having a length in the range of from I to 10 cm and a mean diameter in the range of from 1 to 10 microns.

13. A laminated composite mat as claimed in any one of the preceding Claims, wherein the binder contained in the second layer is an organic material.

14. A laminated composite mat as claimed in Claim 13, wherein the binder is an organic polymer.

15. A laminated composite mat as claimed in Claim 14, wherein the binder is a polymer derived from curing a curable precursor polymer composition.

16. A laminated composite mat as claimed in Claim 15, wherein the binder is a polymer derived from curing a curable precursor polymer composition comprising an acrylic polymer and an epoxy group containing cross-linking agent.

17. A laminated composite mat as claimed in any one of the preceding Claims, wherein the second layer contains from 2 to 15 % by weight of binder based on the total weight of that layer.

18. A laminated composite mat as claimed in any one of the preceding Claims, wherein the second layer has a specific weight per surface area in the range of from 30 to 700 kg/m³.

19. A laminated composite mat as claimed in Claim 18, wherein the second layer has a density in the range of from 100 to 500 kg/m³.

20. A method for the production of a laminated composite mat comprising first and second layers, the first layer comprising an intumescent material and the second layer comprising a plurality of inorganic fibres and a binder which serves to bind the inorganic fibres together and to bond the second layer to the first layer, which method comprises forming the second layer by a process comprising impregnating a fibre mass comprising the inorganic fibres with a liquid binder system comprising the binder or a precursor thereof and a carrier liquid and subjecting the impregnated fibre mass which is obtained to a drying step involving the use of dielectric heating so as to at least substantially remove the carrier liquid.

21. A method for the production of a laminated composite mat comprising first and second layers, the first layer comprising an intumescent material and the second layer comprising a plurality of inorganic fibres and a binder which serves to bind the inorganic fibres together and to bond the second layer to the first layer, which method comprises impregnating a fibre mass comprising the inorganic fibres with a liquid binder system comprising the binder or a precursor thereof and a carrier liquid; and depositing the resultant impregnated fibre mass as a layer on one side of a preformed sheet comprising the intumescent material and subjecting the mass to a drying step so as to at least substantially remove the carrier liquid.

22. A method as claimed in Claim 21, wherein dielectric heating is employed in the drying step.

23. A method as claimed in Claim 21 or Claim 22, wherein a combination of dielectric heating and a flow of hot air is employed in the drying step.

24. A method as claimed in any one of Claims 21, 22 or 23, wherein microwave or radio frequency heating is employed in the drying step.

25. A method as claimed in any one of Claims 21 to 24, wherein the impregnated fibre mass is held under compression during at least a part of the drying step.

26. A method as claimed in Claim 25, wherein the whole of the drying step is performed while the impregnated fibre mass is held under compression.

27. A method as claimed in Claim 25 or Claim 26, wherein the pressure which is applied during the drying step to compress the impregnated fibre mass is in the range of from 5 to 500 KPa.

28. A method as claimed in any one of Claims 21 to 27, wherein the fibre mass which is impregnated is a multi-fibre product in which the individual fibres are assembled into a low density mat.

29. A method as claimed in Claim 28, wherein the multi-fibre product has a thickness in the range of from 10 to 60 mm and a specific weight per surface area of 0.2 to 2.0 kg/m².

30. A method as claimed in any one of Claims 20 to 29, wherein the binder is distributed substantially uniformly through the fibre mass whereby to give the second layer, after the drying step, a laminar shear strength of at least 0.1 mPa.

## Revendications

1. Mat composite laminé comprenant une première et une seconde couche, la première couche comprenant un matériau intumescent et la seconde couche comprenant une multitude de fibres inorganiques et un liant qui sert à relier les fibres ensemble et à relier la seconde couche à la première couche.

2. Mat composite laminé selon la revendication 1, dans lequel le liant est distribué sensiblement de manière uniforme dans l'ensemble de la seconde couche moyennant quoi la seconde couche a une résistance au cisaille ment laminaire d'au moins 0,1 MPa.

3. Mat composite laminé selon la revendication 1 ou la revendication 2, dans lequel la distribution du liant dans la seconde couche est telle que le pourcentage en poids de liant dans chaque région de 1 mm² de la couche par rapport à la masse totale de la couche dans cette région est dans les 40% du pourcentage global en poids de liant dans la couche par rapport à la masse totale de la couche.

4. Mat composite laminé selon la revendication 3, dans lequel la distribution du liant dans la seconde couche est telle que le pourcentage en poids de liant dans chaque région de 1 mm² de la couche par rapport à la masse totale de la couche dans cette région est dans les 10% du pourcentage globale en poids liant dans la couche par rapport à la masse totale de la couche.

5. Mat composite laminé selon l'une quelconque des revendications précédentes, dans lequel la seconde couche a une résistance au cisaillement laminaire d'au moins 0,2 MPa.

6. Mat composite laminé selon l'une quelconque des revendications précédentes, dans lequel la seconde couche est capable d'exercer une pression d'au moins 9,8 x 10⁴ Pa (1,0 kgf/cm²) quand un échantillon de la couche ayant une épaisseur dans l'intervalle de 5 à 10 mm est comprimé à une épaisseur de 3 mm entre deux plaques et que le liant est retiré.

7. Mat composite laminé selon la revendication 6, dans lequel la seconde couche est capable d'exercer une pression dans l'intervalle de 14,7 x 10⁴ Pa à 39,2 x 10⁴ Pa (de 1,5 à 4,0 kgf/cm²) quand un échantillo n de la couche ayant une épaisseur dans l'intervalle de 5 à 10 mm est comprimé à une épaisseur de 3 mm entre deux plaques et que le liant est retiré.

8. Mat composite laminé selon l'une quelconque des revendications précédentes, dans lequel la première cou che est une feuille composite comprenant une combinaison de paillettes de vermiculite non -expansée, d'un liant organique, d'une charge inorganique et facultativement d'un matériau inorganique fibreux.

9. Mat composite laminé selon l'une quelconque des revendications précédentes, dans lequel les fibres inorganiques contenues dans la seconde couche sont thermiquement stables à des températures en excès de 700°C.

10. Mat composite laminé selon l'une quelconque des revendications précédentes, dans lequel les fi bres inorganiques contenues dans la seconde couche sont des fibres de céramique.

11. Mat composite laminé selon la revendication 9 ou la revendication 10, dans lequel les fibres inorganiques contenues dans la seconde couche sont des fibres d'oxyde inorganique polycristallin choisies parmi le groupe constitué des fibres d'alumine, des fibres de mullite, des fibres d'aluminosilicate, des fibres d'aluminoborosilicate, des fibres de zircone et des fibres d'oxyde de titane.

12. Mat composite laminé selon l'une q uelconque des revendications précédentes, dans lequel les fibres inorganiques contenues dans la seconde couche sont des fibres discontinues courtes dans l'intervalle de 1 à 10 cm et d'un diamètre moyen dans l'intervalle de 1 à 10 microns.

13. Mat composite laminé selon l'une quelconque des revendications précédentes, dans lequel le liant contenu dans la seconde couche est un matériau organique.

14. Mat composite laminé selon la revendication 13, dans lequel le liant est un polymère organique.

15. Mat composite laminé selon la revendication 14, dans lequel le liant est un polymère dérivé en durcissant une composition de polymère précurseur durcissable.

16. Mat composite laminé selon la revendication 15, dans lequel le liant est un polymère dérivé en durcissan t une composition de polymère précurseur durcissable comprenant un polymère acrylique et un agent de réticulation contenant des groupes époxy.

17. Mat composite laminé selon l'une quelconque des revendications précédentes, dans lequel la seconde couche contient de 2 à 15% en poids d'un liant par rapport à la masse totale de cette couche.

18. Mat composite laminé selon l'une quelconque des revendications précédentes, dans lequel la seconde couche a une masse spécifique par surface dans l'intervalle de 30 à 700 kg/m³.

19. Mat composite laminé selon la revendication 18, dans lequel la seconde couche a une densité dans l'intervalle de 100 à 500 kg/m³.

20. Procédé pour la production d'un mat composite laminé comprenant une première et une seconde couche, la première couche comprenant un matériau intumescent et la seconde couche comprenant une multitude fibres inorganiques et un liant qui sert à relier les fibres inorganiques ensemble et à lier la seconde couche à la première couche, lequel procédé comprend la form ation d'une seconde couche par un processus comprenant l'imprégnation d'une masse de fibre comprenant les fibres inorganiques avec un système de liant liquide comprenant le liant ou un précurseur de celui-ci et un véhicule liquide et à soumettre la masse d e fibre imprégnée qui est obtenue à une étape de séchage impliquant l'utilisation d'un chauffage diélectrique de façon à retirer au moins sensiblement le véhicule liquide.

21. Procédé pour la production d'un mat composite laminé comprenant une première et une seconde couche, la première couche comprenant un matériau intumescent et la seconde couche comprenant une multitude de fibres inorganiques et un liant qui sert à relier les fibres inorganiques ensemble et à relier la seconde couche à la première couche, lequel procédé comprenant l'imprégnation d'une masse de fibre comprenant les fibres inorganiques avec un système de liant liquide comprenant le liant ou un précurseur de celui-ci et un véhicule liquide ; et le dépôt de la masse de fibre imprégnée comme c ouche sur une face d'une feuille préformée comprenant le matériau intumescent et à soumettre la masse à une étape de séchage de façon à retirer au moins sensiblement le véhicule liquide.

22. Procédé selon la revendication 21, dans lequel le chauffage diélectrique est utilisé dans l'étape de séchage.

23. Procédé selon la revendication 21 ou la revendication 22, dans lequel la combinaison d'un chauffage diélectrique et d'un flux d'air chaud est utilisé dans l'étape de chauffage.

24. Procédé selon l'une quelconque des revendications 21, 22 ou 23, dans lequel un chauffage micro -ondes ou un chauffage à radiofréquence est utilisé dans l'étape de séchage.

25. Procédé selon l'une quelconque des revendications 21 à 24, dans lequel le masse de fibre imprégnée est maintenue sous compression durant au moins une partie de l'étape de séchage.

26. Procédé selon la revendication 25, dans lequel la totalité de l'étape de séchage est réalisée alors que la masse de fibre imprégnée est maintenue sous compression.

27. Procédé sel on la revendication 25 ou la revendication 26, dans lequel la pression qui est appliquée durant l'étape de séchage pour compresser la masse de fibre imprégnée est dans l'intervalle de 5 à 500 kPa.

28. Procédé selon l'une quelconque des revendications 21 à 27, dans lequel la masse de fibre qui est imprégnée est un produit multifibre dans lequel les fibres individuelles sont assemblées en un mat de basse densité.

29. Procédé selon la revendication 28, dans lequel le produit multifibre a une épaisseur dans l'i ntervalle de 10 à 60 mm et une masse spécifique par surface de 0,2 à 2,0 kg/m².

30. Procédé selon l'une quelconque des revendications 20 à 29, dans lequel le liant est distribué sensiblement de manière uniforme dans la masse de fibre pour donner de ce fait à la seconde couche, après l'étape de séchage, une résistance au cisaillement laminaire d'au moins 0,1 mPa.

## Patentansprüche

1. Laminierte Verbundmatte mit einer ersten und einer zweiten Schicht, wobei die erste Schicht eine Intumeszenzmasse und die zweite Schicht eine Mehrzahl von anorganischen Fasern sowie ein Bindemittel enthält, das dazu dient, die Fasern aneinander sowie die zweite Schicht an die erste Schicht zu binden.

2. Laminierte Verbundmatte nach Anspruch 1, worin das Bindemittel im wesentlichen durch die zweite Schicht hindurch gleichmäßig verteilt ist, wodurch die zweite Schicht eine Laminarscherfestigkeit von mindestens 0,1 MPa aufweist.

3. Laminierte Verbundmatte nach Anspruch 1 oder 2, worin die Verteilung des Bindemittels in der zweiten Schicht derart ausgebildet ist, dass der Gewichtsprozentsatz des Bindemittels in jedem Bereich von 1 mm² der Schicht, bezogen auf das Gesamtgewicht der Schicht, in jenem Bereich innerhalb von 40 % des gesamten Gewichtsprozentsatzes des Bindemittels in der Schicht, bezogen auf das Gesamtgewicht der Schicht, liegt.

4. Laminierte Verbundmatte nach Anspruch 3, worin die Verteilung des Bindemittels in der zweiten Schicht derart ausgebildet ist, dass der Gewichtsprozentsatz des Bindemittels in jedem Bereich von 1 mm² der Schicht, bezogen auf das Gesamtgewicht der Schicht, in jenem Bereich innerhalb von 10 % des gesamten Gewichtsprozentsatzes des Bindemittels in der Schicht, bezogen auf das Gesamtgewicht der Schicht, liegt.

5. Laminierte Verbundmatte nach einem der vorstehenden Ansprüche, worin die zweite Schicht eine Laminarscherfestigkeit von mindestens 0,2 MPa aufweist.

6. Laminierte Verbundmatte nach einem der vorstehenden Ansprüche, worin die zweite Schicht einen Druck von mindestens 9,8 x 10⁴ Pa (1,0 kgf/cm²) ausüben kann, wenn eine Probe der Schicht mit einer Dicke im Bereich von 5 bis 10 mm zwischen zwei Platten bis zu einer Dicke von 3 mm komprimiert und das Bindemittel entfernt wird.

7. Laminierte Verbundmatte nach Anspruch 6, worin die zweite Schicht einen Druck im Bereich von 14,7 x 104 bis 39,2 x 10⁴ Pa (1,5 bis 4,0 kgf/cm²) ausüben kann, wenn eine Probe der Schicht mit einer Dicke im Bereich von 5 bis 10 mm zwischen zwei Platten bis zu einer Dicke von 3 mm komprimiert und das Bindemittel entfernt wird.

8. Laminierte Verbundmatte nach einem der vorstehenden Ansprüche, worin die erste Schicht eine Verbundplatte ist, die eine Kombination aus unexpandierten Vermiculit-Flocken, einem organischen Bindemittel, einem anorganischen Füllstoff und gegebenenfalls einem faserigen anorganischen Material enthält.

9. Laminierte Verbundmatte nach einem der vorstehenden Ansprüche, worin die in der zweiten Schicht enthaltenen anorganischen Fasern bei Temperaturen über 700°C thermisch stabil sind.

10. Laminierte Verbundmatte nach einem der vorstehenden Ansprüche, worin die in der zweiten Schicht enthaltenen anorganischen Fasern Keramikfasern sind.

11. Laminierte Verbundmatte nach Anspruch 9 oder 10, worin die in der zweiten Schicht enthaltenen anorganischen Fasern polykristalline anorganische Oxidfasern sind, die aus Aluminiumoxidfasern, Mullitfasern, Aluminosilicatfasern, Aluminoborsilicatfasern, Zirconiumoxidfasern und Titandioxidfasern ausgewählt sind.

12. Laminierte Verbundmatte nach einem der vorstehenden Ansprüche, worin die in der zweiten Schicht enthaltenen anorganischen Fasern kurze Stapelfasern mit einer Länge im Bereich von 1 bis 10 cm und einem mittleren Durchmesser im Bereich von 1 bis 10 Micron sind.

13. Laminierte Verbundmatte nach einem der vorstehenden Ansprüche, worin das in der zweiten Schicht enthaltene Bindemittel ein organisches Material ist.

14. Laminierte Verbundmatte nach Anspruch 13, worin das Bindemittel ein organisches Polymer ist.

15. Laminierte Verbundmatte nach Anspruch 14, worin das Bindemittel ein Polymer ist, das sich durch das Härten einer härtbaren Vorläuferpolymerzusammensetzung ergibt.

16. Laminierte Verbundmatte nach Anspruch 15, worin das Bindemittel ein Polymer ist, das sich durch Härten einer härtbaren Vorläuferpolymerzusammensetzung ergibt, die ein Acrylpolymer und eine Epoxidgruppe enthaltendes Vernetzungsmittel beinhaltet.

17. Laminierte Verbundmatte nach einem der vorstehenden Ansprüche, worin die zweite Schicht 2 bis 15 Gew% Bindemittel, bezogen auf das Gesamtgewicht jener Schicht, enthält.

18. Laminierte Verbundmatte nach einem der vorstehenden Ansprüche, worin die zweite Schicht ein spezifisches Gewicht pro Oberfläche im Bereich von 30 bis 700 kg/m³ aufweist.

19. Laminierte Verbundmatte nach Anspruch 18, worin die zweite Schicht eine Dichte im Bereich von 100 bis 500 kg/m³ aufweist.

20. Verfahren zum Herstellen einer laminierten Verbundmatte mit einer ersten und einer zweiten Schicht, wobei die erste Schicht eine Intumeszenzmasse und die zweite Schicht eine Mehrzahl von anorganischen Fasern sowie ein Bindemittel enthält, das dazu dient, die anorganischen Fasern aneinander und die zweite Schicht an die erste Schicht zu binden, wobei das Verfahren das Ausbilden der zweiten Schicht durch ein Verfahren beinhaltet, bei dem eine die anorganischen Fasern enthaltende Fasermasse mit einem flüssigen Bindemittelsystem imprägniert wird, in dem das Bindemittel oder ein Vorläufer hiervon und eine Trägerflüssigkeit enthalten sind, und das Behandeln der erhaltenen imprägnierten Fasermasse in einer Trockenstufe unter Anwendung von dielektrischem Erhitzen, so dass mindestens im wesentlichen die Trägerflüssigkeit entfernt wird, beinhaltet.

21. Verfahren zum Herstellen einer laminierten Verbundmatte mit einer ersten und einer zweiten Schicht, wobei die erste Schicht eine Intumeszenzmasse und die zweite Schicht eine Mehrzahl von anorganischen Fasern sowie ein Bindemittel enthält, welches dazu dient, die anorganischen Fasern aneinander und die zweite Schicht an die erste Schicht zu binden, wobei das Verfahren das Imprägnieren einer die anorganischen Fasern enthaltenden Fasermasse mit einem flüssigen Bindemittelsystem, welches das Bindemittel oder einen Vorläufer hiervon und eine Trägerflüssigkeit enthält, und das Absetzen der erhaltenen imprägnierten Fasermasse als Schicht auf einer Seite einer vorgeformten Platte, welche die Intumeszenzmasse enthält, sowie das Behandeln der Masse in einer Trockenstufe, so dass mindestens im wesentlichen die Trägerflüssigkeit entfernt wird, umfasst.

22. Verfahren nach Anspruch 21, worin in der Trockenstufe ein dielektrisches Erhitzen angewandt wird.

23. Verfahren nach Anspruch 21 oder 22, worin in der Trockenstufe eine Kombination aus einem dielektrischen Erhitzen und einem Heißluftstrom angewandt wird.

24. Verfahren nach einem der Ansprüche 21, 22 oder 23, worin in der Trockenstufe eine Mikrowellen- oder Hochfrequenzerwärmung angewandt wird.

25. Verfahren nach einem der Ansprüche 21 bis 24, worin die imprägnierte Fasermasse während mindestens eines Teils der Trockenstufe unter einer Kompression gehalten wird.

26. Verfahren nach Anspruch 25, worin die ganze Trockenstufe durchgeführt wird, während die imprägnierte Fasermasse unter einer Kompression gehalten wird.

27. Verfahren nach Anspruch 25 oder 26, worin der Druck, der während der Trockenstufe ausgeübt wird, um die imprägnierte Fasermasse zu komprimieren, im Bereich von 5 bis 500 kPa liegt.

28. Verfahren nach einem der Ansprüche 21 bis 27, worin die Fasermasse, die imprägniert ist, ein Multifaserprodukt ist, in dem die einzelnen Fasern zu einer Matte mit niedriger Dichte angeordnet sind.

29. Verfahren nach Anspruch 28, worin das Multifaserprodukt eine Dicke im Bereich von 10 bis 60 mm und ein spezifisches Gewicht pro Oberfläche von 0,2 bis 2,0 kg/m² aufweist.

30. Verfahren nach einem der Ansprüche 20 bis 29, worin das Bindemittel im wesentlichen gleichmäßig durch die Fasermasse hindurch verteilt ist, wodurch nach der Trockenstufe der zweiten Schicht eine Laminarscherfestigkeit von mindestens 0,1 mPa verliehen wird.
